# EUROPÄISCHE PATENTSCHRIFT

(11) **EP 1 345 180 B1**
(45) Veröffentlichungstag und Bekanntmachung des Hinweises auf die Patenterteilung: **11.05.2005**
(21) Anmeldenummer: 02405186.4
(22) Anmeldetag: 11.03.2002
(51) Int. Cl.: G07B 15/00

(54) **System und Verfahren zum Zuweisen und Kontrollieren von Dienstleistungsberechtigungen und dafür geeignete Vorrichtungen**
System and method for allocating and controlling of service authorisations and appropriate devices therefor
Procédé et dispositif servant à affecter et contrôler des autorisations de service et dispositif pour la mise en oeuvre de ce procédé

(43) Veröffentlichungstag der Anmeldung: 17.09.2003
(73) Patentinhaber: Swisscom Mobile AG, 3050 Bern (CH)
(72) Erfinder: Busch-Lauper, Karin, 3014 Bern (CH); Lauper, Eric, 3014 Bern (CH); Huber, Adriano, 6600 Locarno (CH)
(74) Vertreter: Vogel, Dany

(56) Entgegenhaltungen:
- WO-A-00/74406
- WO-A-01/03090
- WO-A-01/15027
- DE-A- 10 016 701
- DE-A- 10 032 406
- US-A- 5 724 520

## Beschreibung

### Technisches Gebiet

Die vorliegende Erfindung betrifft ein System und ein Verfahren zum Zuweisen und Kontrollieren von Dienstleistungsberechtigungen und dafür geeignete Vorrichtungen. Die Erfindung betrifft insbesondere ein System und ein Verfahren zum Zuweisen und Kontrollieren von Dienstleistungsberechtigungen, in welchen von einem Benutzer mittels eines Kommunikationsendgeräts Bestelldaten über ein Kommunikationsnetz an eine computerisierte Berechtigungszentrale übermittelt werden und in welchen automatisch eine Endgerätkennung bestimmt wird, die dem Kommunikationsendgerät zugeordnet ist, von dem die Bestelldaten übermittelt wurden.

### Stand der Technik

Die Kontrolle von Dienstleistungsberechtigungen ist insbesondere im Zusammenhang mit der Benützung von öffentlichen Verkehrsmitteln und dem Zutritt zu Dienstvorrichtungen wie Kinos, Theater oder Sportstadien von Bedeutung. In den bekannten elektronischen Systemen und Verfahren zum Zuweisen und Kontrollieren von Dienstleistungsberechtigungen ersteht ein interessierter Benutzer eine Berechtigung für die Inanspruchnahme einer Dienstleistung, indem er mittels eines Kommunikationsendgeräts, beispielsweise ein Telefon, ein Mobilfunktelefon oder ein Personal Computer (PC), diesbezügliche Bestelldaten über ein Kommunikationsnetz, beispielsweise das öffentlich geschaltete Telefonnetz, ein Mobilfunknetz oder das Internet, an eine computerisierte Zentrale übermittelt. Die Bestelldaten enthalten Angaben über die gewünschte Dienstleistung, wie Dienstleistungsart, Dienstleistungsklasse, Dienstleistungsort oder Dienstleistungszeitpunkt, über die Anzahl der gewünschten Berechtigungen und möglicherweise über die bevorzugten Zahlungsmodalitäten. In der computerisierten Zentrale, beispielsweise Ticket-Zentrale oder Berechtigungszentrale genannt, wird automatisch die Endgerätkennung, beispielsweise die Rufnummer, des Kommunikationsendgeräts bestimmt, von welchem die Bestelldaten empfangen wurden. Basierend auf den empfangenen Bestelldaten übermittelt die Berechtigungszentrale eines oder mehrere elektronische Tickets zur Speicherung an das Kommunikationsendgerät, das durch die erfasste Endgerätkennung bestimmt ist. In diesen bekannten Systemen wird die Inanspruchnahme der gewünschten Dienstleistungen mittels Zutrittskontrollvorrichtungen, die den Zugang zu den öffentlichen Verkehrsmitteln und den Dienstvorrichtungen kontrollieren, nur berechtigten Benutzern gestattet. Um die Zutrittskontrollvorrichtung zu passieren, wird das gespeicherte elektronische Ticket vom Kommunikationsendgerät an die Zutrittskontrollvorrichtung übertragen und dem Benutzer der Zutritt von der Zutrittskontrollvorrichtung freigegeben.

In der Patentanmeldung WO 99/09502 wird ein elektronisches Handelssystem beschrieben, in welchem mittels eines Mobilfunktelefons über ein Mobilfunknetz elektronische Tickets von einem Dienstanbietersystem bestellt werden können. Gemäss WO 99/09502 werden in der Ticket-Bestellung die Benutzeridentifizierung des bestellenden Benutzers vom Mobilfunktelefon an das Dienstanbietersystem übermittelt, wo automatisch die Rufnummer des Mobilfunktelefons bestimmt wird. Gemäss WO 99/09502 wird gemäss der Ticket-Bestellung ein elektronisches Ticket vom Dienstanbietersystem über das Mobilfunknetz an das Mobilfunktelefon übermittelt, von welchem die Ticket-Bestellung aufgegeben wurde und dort beispielsweise auf einer Chipkarte gespeichert. Gemäss WO 99/09502 können die gespeicherten Tickets als Zutritts-Tickets für den Zutritt zu zutrittskontrollierten Dienstvorrichtungen, beispielsweise in einem Kino, eingesetzt werden, wobei die Tickets vom Mobilfunktelefon, beispielsweise über eine kontaktlose Schnittstelle, an die Zutrittskontrollvorrichtung übertragen werden.

In der Patentanmeldung WO 01/15027 wird ein Verfahren für die Zugangskontrolle beschrieben, in welchem ein Benutzer mittels eines PCs über ein Telekommunikationsnetz Veranstaltungstickets von einem Server bestellt. Gemäss WO 01/15027 übermittelt der Benutzer dem Server die Identifizierungsdaten eines persönlichen Identifizierungselements, beispielsweise eine Magnetkarte oder eine Chipkarte. Der Server übermittelt die Identifizierungsdaten vor der Veranstaltung an eine Datenbank des Zugangskontrollsystems am Veranstaltungsort. Zur Zugangskontrolle nach WO 01/15027 werden die Identifizierungsdaten durch das Zugangskontrollsystem vom Identifizierungselement des Benutzers gelesen und mit den in der Datenbank gespeicherten Daten verglichen.

Die bekannten elektronischen Systeme und Verfahren zum Zuweisen und Kontrollieren von Dienstleistungsberechtigungen basieren auf einer technischen Infrastruktur, die spezielle Kommunikationsendgeräte bei den Benutzern voraussetzt. Die speziellen Kommunikationsendgeräte benötigen insbesondere geeignete Hardware- und Softwarekomponenten zum Entgegennehmen und Speichern der elektronischen Tickets und zum Übertragen der gespeicherten Tickets an eine Zutrittskontrollvorrichtung. Benutzer, die über keine solchen Kommunikationsendgeräte verfügen, sind folglich von der Benützung dieser bekannten elektronischen Systeme und Verfahren ausgeschlossen. Die Kosten solcher Kommunikationsendgeräte sind zudem zu hoch, um die Kommunikationsendgeräte gratis an interessierte Benutzer abzugeben. Überdies besteht bei der Speicherung von elektronischen Tickets in Kommunikationsendgeräten von Benutzern selbst bei der Verwendung von kryptographischen Mitteln ein verbleibendes Sicherheitsrisiko, dass die elektronischen Tickets manipuliert, kopiert oder gefälscht werden.

### Darstellung der Erfindung

Es ist eine Aufgabe der vorliegenden Erfindung, ein System und ein Verfahren zum Zuweisen und Kontrollieren von Dienstleistungsberechtigungen und dafür geeignete Vorrichtungen vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Das System zum Zuweisen und Kontrollieren von Dienstleistungsberechtigungen umfasst eine computerisierte, mit einem Kommunikationsnetz verbindbare Berechtigungszentrale mit einem Kommunikationsmodul zum Entgegennehmen von Bestelldaten, die von einem Benutzer mittels eines Kommunikationsendgeräts über das Kommunikationsnetz übermittelt werden, sowie ein Endgerätbestimmungsmodul zur automatischen Bestimmung einer Endgerätkennung, die dem Kommunikationsendgerät zugeordnet ist, von dem die Bestelldaten übermittelt wurden. Das Endgerätbestimmungsmodul ist beispielsweise so beschaffen, dass es automatisch die Rufnummer des Kommunikationsendgeräts als Endgerätkennung bestimmt.

Die oben genannten Ziele werden durch die Erfindung insbesondere dadurch erreicht, dass die Berechtigungszentrale ein Benutzerbestimmungsmodul zur Bestimmung einer Benutzerkennung, die der bestimmten Endgerätkennung zugeordnet ist, umfasst, dass die Berechtigungszentrale ein Belegerzeugungsmodul umfasst zum Erzeugen eines Berechtigungsbelegs basierend auf den empfangenen Bestelldaten, welcher Berechtigungsbeleg die bestimmte Benutzerkennung umfasst, dass das System Berechtigungsdatenspeicher von mindestens einem Dienstleistungserbringer umfasst, dass die Berechtigungszentrale ein Berechtigungslademodul umfasst zum Laden des erzeugten Berechtigungsbelegs über einen Kommunikationskanal in einen der Berechtigungsdatenspeicher, dass das System Lesevorrichtungen umfasst zum Lesen einer Benutzerkennung von einem Benutzerkennungsträger eines Benutzers, und dass das System Berechtigungskontrollmodule umfasst zum Überprüfen der Übereinstimmung der gelesenen Benutzerkennung mit den im Berechtigungsdatenspeicher gespeicherten Benutzerkennungen. Das Benutzerbestimmungsmodul ist beispielsweise so beschaffen, dass es die Benutzerkennung aus einer Benutzerdatenbank bestimmt, in welcher Rufnummern und diesen Rufnummern zugeordnete Benutzerkennungen gespeichert sind. Der Vorteil eines derart ausgestalteten Systems besteht darin, dass die Berechtigung zum Bezug einer Dienstleistung einem Benutzer zugewiesen und kontrolliert werden kann, ohne dass der Benutzer mit einem kostspieligen speziellen Kommunikationsendgerät ausgestattet werden muss. Im Unterschied zu den bekannten Systemen und Verfahren zum Zuweisen und Kontrollieren von Dienstleistungsberechtigungen müssen die Benutzer nämlich bloss mit kostengünstigen Benutzerkennungsträgem ausgestattet werden, beispielsweise mit Chipkarten oder Magnetkarten. Das erfindungsgemässe System ermöglicht, dass eine Dienstleistungsberechtigung einem bestimmten Benutzer zugeordnet und in Form eines Berechtigungsbelegs in einem Berechtigungsdatenspeicher eines Dienstleistungserbringers gespeichert werden kann und dass bei der Kontrolle der Dienstleistungsberechtigung des Benutzers bloss seine Benutzerkennung vom kostengünstigen Benutzerkennungsträger gelesen und mit den gespeicherten Berechtigungsbelegen verglichen werden muss. Die Ausstattung von Benutzem mit Benutzerkennungsträger ist insbesondere gerechtfertigt für Anwendungen, in denen die Benutzer oft von einer Dienstleistungen Gebrauch machen, sei es häufig die gleiche Art Dienstleistungen oder seien es verschiedene Arten von Dienstleistungen. Das vorliegende System zum Zuweisen und Kontrollieren von Dienstleistungsberechtigungen eignet sich insbesondere für die Anwendung im Zusammenhang mit öffentlichen Verkehrsmitteln, insbesondere für die Eisenbahn.

Erfindungsgemäss ist das Berechtigungslademodul so beschaffen, dass es den Berechtigungsbeleg in einen Berechtigungsdatenspeicher lädt, der durch die empfangenen Bestelldaten bestimmt ist. Dadurch werden die Dienstleistungsberechtigungen der Benutzer dienstspezifisch gespeichert, so dass bei der Kontrolle von Dienstleistungsberechtigungen zielgerichtet im betreffenden Berechtigungsdatenspeicher gesucht werden kann.

Erfindungsgemäss werden zum Zuweisen und Kontrollieren von Dienstleistungsberechtigungen für öffentliche Verkehrsmittel Reisedaten in die Bestelldaten eingefügt und der Berechtigungsdatenspeicher, in den der Berechtigungsbeleg geladen werden soll, wird durch die Berechtigungszentrale basierend auf den empfangenen Reisedaten. Die Bestelldaten geben beispielsweise eine bestimmte Reisestrecke oder ein spezifisches öffentliches Verkehrsmittel an, so dass der Berechtigungsbeleg in einen Berechtigungsdatenspeicher geladen wird, der der betreffenden Reisestrecke, respektive dem spezifischen öffentlichen Verkehrsmittel, zugeordnet ist. Zu diesem Zweck umfasst das System erfindungsgemäss eine Reisedatenbank, in welcher Berechtigungsdatenspeicher Reisestrecken und/oder spezifischen öffentlichen Verkehrsmitteln zugeordnet sind. Die Berechtigungsdatenspeicher sind vorteilhafterweise auch jeweils möglichst nahe beim betreffenden Dienstleistungsort angebracht, so dass allfällige Kommunikationsstrecken und Antwortzeiten zwischen dem Berechtigungskontrollmodul und dem Berechtigungsdatenspeicher möglichst kurz sind.

In einer Ausführungsvariante umfasst das System mehrere mobile computerisierte Kontrollvorrichtungen, welche jeweils einen der Berechtigungsdatenspeicher, eine der Lesevorrichtungen und eines der Berechtigungskontrollmodule umfassen, wobei das Berechtigungskontrollmodul mit der Lesevorrichtung und dem Berechtigungsdatenspeicher verbunden ist. Die Lesevorrichtung ist beispielsweise eingerichtet, um die Benutzerkennung von einer Chipkarte zu lesen. In dieser Ausführungsvariante ist das Berechtigungslademodul vorzugsweise so beschaffen, dass es den Berechtigungsbeleg über ein Mobilfunknetz in den Berechtigungsdatenspeicher derjenigen Kontrollvorrichtung lädt, die durch die empfangenen Bestelldaten bestimmt ist. Im Beispiel der öffentlichen Verkehrsmittel, befinden sich diese Kontrollvorrichtungen direkt im Verkehrsmittel, das durch die Bestelldaten bestimmt ist, oder in einer mobilen, tragbaren Vorrichtung, die in dieses Verkehrsmittel gebracht werden kann. Die mobile und tragbare Ausführung der Kontrollvorrichtung hat insbesondere den Vorteil, dass sie durch Kontrollpersonal in Verbindung mit der Kontrolle von herkömmlichen Billetten und Abonnementen in öffentlichen Verkehrsmitteln eingesetzt werden kann, ohne dass die Verkehrsmittel umgerüstet werden müssen.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein System zum Zuweisen und Kontrollieren von Dienstleistungsberechtigungen illustriert, welches System eine mit einem Kommunikationsnetz verbundene Berechtigungszentrale sowie mehrere Kontrollvorrichtungen umfasst.
Figur 2 zeigt ein Flussdiagramm, welches schematisch die Schrittfolge bei der Zuweisung und Kontrolle von Dienstleistungsberechtigungen sowie den diesbezüglichen Datenaustausch zwischen dem Kommunikationsendgerät eines Benutzers, der Berechtigungszentrale und einer Kontrollvorrichtung illustriert.

### Wege zur Ausführung der Erfindung

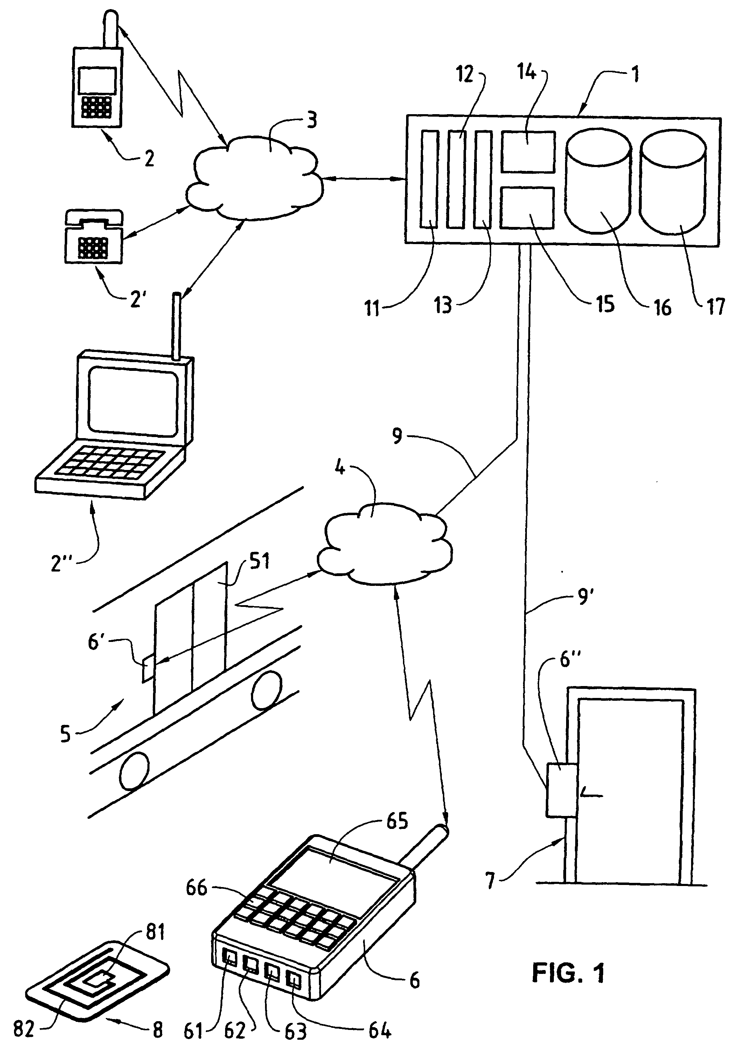

In der Figur 1 beziehen sich die Bezugszeichen 2, 2' und 2" auf Kommunikationsendgeräte, mittels welchen ein Benutzer über das Kommunikationsnetz 3 mit der Berechtigungszentrale 1 kommunizieren kann. Das Kommunikationsendgerät 2 ist ein mobiles Kommunikationsendgerät, insbesondere ein Mobilfunktelefon oder ein Laptop- oder PDA-Computer (Personal Digital Assistant) mit einem Mobilfunkmodul. Bestelldaten können vom Kommunikationsendgerät 2 beispielsweise mittels SMS-Meldungen (Short Message Services), USSD-Meldungen (Unstructured Supplementary Services Data) oder über WAP-Dienste (Wireless Application Protocol) an die Berechtigungszentrale 1 übermittelt werden. Das Kommunikationsendgerät 2' ist ein Festnetztelefon und das Kommunikationsendgerät 2" ist ein kommunikationsfähiger Personal Computer (PC). Zur Verbindung der verschiedenen Kommunikationsendgeräte 2, 2' und 2" umfasst das Kommunikationsnetz 3 ein Mobilfunknetz, beispielsweise ein GSM-Netz (Global System for Mobile Communication), ein UMTS-Netz (Universal Mobile Telephone System) oder ein anderes, beispielsweise satellitenbasiertes Mobilfunknetz, ein Telefonfestnetz, beispielsweise das öffentliche geschaltete Telefonnetz oder ein ISDN-Netz (Integrated Services Digital Network) und das Internet.

In der Figur 1 bezieht sich das Bezugszeichen 1 auf eine computerisierte Berechtigungszentrale, welche einen oder mehrere Computer umfasst. Zur Verbindung mit dem Kommunikationsnetz 3 und zur Kommunikation mit den Kommunikationsendgeräten 2, 2', 2" umfasst die Berechtigungszentrale 1 ein Kommunikationsmodul 11.

Die Berechtigungszentrale 1 umfasst zudem ein Endgerätbestimmungsmodul 12 zur Bestimmung der Endgerätkennung des Kommunikationsendgeräts 2, 2', 2", von welchem in der Berechtigungszentrale 1 Bestelldaten für eine Dienstleistungsberechtigung über das Kommunikationsnetz 3 empfangen wurden. Das Endgerätbestimmungsmodul 12 ist vorzugsweise als programmiertes Softwaremodul ausgeführt, das die Kommunikationsadresse oder Rufnummer, beispielsweise eine MSISDN (Mobile Subscriber ISDN), des Kommunikationsendgeräts 2, 2', 2" als Endgerätkennung bestimmt. Die Endgerätkennung ist beispielsweise aus der Netzinfrastruktur des Kommunikationsnetzes 3 verfügbar, beispielsweise basierend auf bekannten Mechanismen wie ANI (Automatic Number Identification) oder ACI (Automatic Caller Identification), und/oder sie ist als Bestandteil von Dienstdaten der Kommunikationsverbindung zwischen dem Kommunikationsendgerät 2, 2', 2" und der Berechtigungszentrale 1 verfügbar.

In einer Ausführungsvariante umfasst das Kommunikationsnetz 3 eine Endgerätbestimmungseinheit (nicht dargestellt), welche die Endgerätkennung des Kommunikationsendgeräts 2, 2', 2" bestimmt, welche aus einer Alias-Datenbank (nicht dargestellt) eine Alias-Endgerätkennung entnimmt, die der bestimmten Endgerätkennung zugeordnet ist, und welche die Alias-Endgerätkennung dem Endgerätbestimmungsmodul 12 der Berechtigungszentrale 1 übermittelt. Durch die Verwendung der Alias-Endgerätkennung an Stelle der tatsächlichen Endgerätkennung des Kommunikationsendgeräts 2, 2', 2" kann die tatsächliche Endgerätkennung vom Betreiber der Berechtigungszentrale 1 versteckt gehalten werden. Die Verrechnung bezogener Berechtigungen erfolgt in dieser Ausführungsvariante durch den Betreiber des Kommunikationsnetzes 3, der über die Endgerätkennung Zugang zu der Identität des Benutzers des Kommunikationsendgeräts 2, 2', 2" hat.

Die Berechtigungszentrale 1 umfasst eine Benutzerdatenbank 17, in welcher Endgerätkennungen, insbesondere Rufnummern der Kommunikationsendgeräte 2, 2', 2", und diesen Endgerätkennungen zugeordnete Benutzerkennungen gespeichert sind. Die Benutzerkennungen sind vorzugsweise digitale kryptographische Zertifikate, sie können aber auch als alphanumerische Codes ausgeführt sein.

Ein Benutzer, der an der Teilnahme im System zum Zuweisen und Kontrollieren von Dienstleistungsberechtigungen interessiert ist, wird in der Benutzerdatenbank 17 eingetragen. In der Benutzerdatenbank werden Benutzerdaten wie Name, Vorname, Postadresse, Rechnungsadresse, bevorzugte Zahlungsart, Bankverbindungen oder Kreditkartennummem des Benutzers gespeichert. Insbesondere wird die Endgerätkennung eines oder mehrerer Kommunikationsendgeräte 2, 2', 2" des Benutzers in der Benutzerdatenbank 17 gespeichert. Zudem wird für den Benutzer eine Benutzerkennung erzeugt und sowohl in der Benutzerdatenbank 17 der Endgerätkennung zugeordnet als auch auf einem Benutzerkennungsträger 8 gespeichert. Die Benutzerkennung wird vorzugsweise so auf dem Benutzerkennungsträger 8 gespeichert, dass sie vom Benutzer nicht gelesen und nicht manipuliert werden kann. Der Benutzerkennungsträger 8 ist eine Magnetstreifenkarte oder vorzugsweise eine Chipkarte und wird dem registrierten Benutzer ausgehändigt respektive zugestellt. Es könnten auch Lochkarten oder Karten mit ein- oder mehrdimensionalen Strichcodes verwendet werden; diese können jedoch zu einfach kopiert werden. Wie in der Fig. 1 schematisch dargestellt ist, umfasst der als Chipkarte ausgeführte Benutzerkennungsträger 8 einen Chip 81 mit einem Datenspeicher, in welchem die Benutzerkennung gespeichert ist. Der als Chipkarte ausgeführte Benutzerkennungsträger 8 umfasst zudem eine Spule 82, die ermöglicht, dass die Benutzerkennung kontaktlos (induktiv) vom Benutzerkennungsträger 8 gelesen werden kann. Der als Chipkarte ausgeführte Benutzerkennungsträger 8 kann aber auch mit Kontakten versehen sein, zum kontaktbehafteten Lesen der Benutzerkennung.

Die Berechtigungszentrale 1 umfasst ein Benutzerbestimmungsmodul 12, welches der Benutzerdatenbank 17 die Benutzerkennung entnimmt, die der vorgängig bestimmten Endgerätkennung des Kommunikationsendgeräts 2, 2', 2" des Benutzer zugeordnet ist. Das Benutzerbestimmungsmodul 12 ist vorzugsweise als programmiertes Softwaremodul ausgeführt.

Die Berechtigungszentrale 1 umfasst ein Belegerzeugungsmodul 14, welches basierend auf Bestelldaten, die von einem interessierten Benutzer über das Kommunikationsnetz 3 empfangen wurden, einen Berechtigungsbeleg erzeugt, der die bestimmte Benutzerkennung des betreffenden Benutzers umfasst. Die Bestelldaten geben die Dienstleistung an, für die eine Berechtigung gewünscht wird, sowie gegebenenfalls die Anzahl solcher Berechtigungen, falls sie für mehrere Personen ausreichen soll. Die Bestelldaten umfassen beispielsweise Angaben über Dienstleistungsart, Dienstleistungsklasse, Dienstleistungsort, Dienstleistungszeitpunkt, Dienstleistungsdauer und möglicherweise über die bevorzugte Zahlungsart. Neben der Benutzerkennung des betreffenden Benutzers umfasst der Berechtigungsbeleg Berechtigungsdaten, die die Dienstleistungsberechtigung des Benutzers spezifizieren und den diesbezüglichen Angaben der Bestelldaten entsprechen. Der Berechtigungsbeleg kann Berechtigungen für mehrere Benutzer umfassen, z.B. eine Familienkarte; er kann Berechtigungen für längere Zeitperioden umfassen, z.B. ein Jahres- oder Monatsabonnement für einen Streckenabschnitt oder für das gesamte Schienennetz eines Bahnbetreibers; er kann Berechtigungen für Tarifreduktionen umfassen, z.B. ein Halbtaxabonnement, das zum Bezug von Berechtigungen zum halben Preis berechtigt, und er kann Kombinationen von Berechtigungen für mehrere Bahnen oder Bahnbetreiber umfassen, z.B. ein kombinierter Zugs- und Skiliftpass. Das Belegerzeugungsmodul 14 ist vorzugsweise als programmiertes Softwaremodul ausgeführt.

Die Berechtigungszentrale 1 umfasst ein Berechtigungslademodul 15, welches einen erzeugten Berechtigungsbeleg über einen Kommunikationskanal 9 zur Speicherung in einen Berechtigungsdatenspeicher 63 eines Dienstleistungserbringers lädt. Das Berechtigungslademodul 15 ist vorzugsweise als programmiertes Softwaremodul ausgeführt. Das Berechtigungslademodul 15 bestimmt den Berechtigungsdatenspeicher, in den es den erzeugten Berechtigungsbeleg lädt, basierend auf den empfangenen Bestelldaten.

In der Anwendung für öffentliche Verkehrsmittel gilt die Bestellung einer Berechtigung für eine (oder mehrere) Fahrt(en) in einem öffentlichen Verkehrsmittel, insbesondere in einem Zug (Eisenbahn), und die Bestelldaten umfassen Reisedaten für ein öffentliches Verkehrsmittel, beispielsweise eine bestimmte Reisestrecke (z.B. Paris-Berlin), ein Reisedatum, eine Reisezeit oder eine Identifizierung eines spezifischen Verkehrsmittels, zum Beispiel eine Zugnummer. Für diese Anwendung umfasst die Berechtigungszentrale 1 eine Reisedatenbank 16 mit Fahrplänen, in welcher Reisestrecken und/oder öffentliche Verkehrsmittel Berechtigungsdatenspeichern zugeordnet sind. Die Zuordnung erfolgt beispielsweise durch die Verknüpfung von Angaben über Reisestrecken und/oder Identifizierungen von spezifischen öffentlichen Verkehrsmitteln mit Adress- oder Identifizierungsinformationen von Berechtigungsdatenspeichern. Basierend auf den in den Bestelldaten enthaltenen Reisedaten bestimmt das Berechtigungslademodul 15 in der Reisedatenbank 16 den Berechtigungsdatenspeicher 63, in den der erzeugte Berechtigungsbeleg geladen werden soll, beispielsweise in den Berechtigungsdatenspeicher 63, der Kontrollvorrichtung 6, die dem betreffenden Zug zugeordnet ist, oder in einen Berechtigungsdatenspeicher, einer Kontrollvorrichtung 6', die im betreffenden Verkehrsmittel 5 installiert ist.

Die Berechtigungszentrale umfasst auch ein nicht dargestelltes Verrechnungsmodul zum Verrechnen der Kosten einer Berechtigung, die als Berechtigungsbeleg in einen Berechtigungsdatenspeicher geladen wird.

Der Berechtigungsdatenspeicher 63 befindet sich vorzugsweise in einer mobilen Kontrollvorrichtung 6, 6'. Im Falle einer mobilen Kontrollvorrichtung 6, 6' führt der Kommunikationskanal 9 vorzugsweise über ein Mobilfunknetz 4, beispielsweise ein GSM-Netz, ein UMTS-Netz oder ein anderes, beispielsweise satellitenbasiertes Mobilfunknetz. Die mobile Kontrollvorrichtung 6 könnte auch entfernbar mit einer fest vernetzten so genannten Dockingstation verbunden werden, um neue Berechtigungsbelege zu laden. Wie in der Figur 1 schematisch dargestellt ist, ist die Kontrollvorrichtung 6 als mobile tragbare Kontrollvorrichtung ausgeführt, die Kontrollvorrichtung 6' ist fest in einer mobilen Vorrichtung installiert, insbesondere in einem öffentlichen Verkehrsmittel 5, und die Kontrollvorrichtung 6" ist fest an einem festen zutrittskontrollierten Dienstort 7 installiert und über einen festen Kommunikationskanal 9' mit der Berechtigungszentrale 1 verbunden.

Wie in der Figur 1 schematisch dargestellt ist, umfasst die Kontrollvorrichtung 6 eine Lesevorrichtung 61 zum Lesen von Benutzerkennungen von einem Benutzerkennungsträger 8, ein Berechtigungskontrollmodul 62, einen Berechtigungsdatenspeicher 63 sowie ein Kommunikationsmodul 64 für die Kommunikation über das Mobilfunknetz 4. In der Figur 1 ist einzig die mobile tragbare Kontrollvorrichtung 6 detailliert dargestellt; die Kontrollvorrichtungen 6' und 6" umfassen jedoch die gleichen funktionalen Module, wobei die Kontrollvorrichtung 6" im Unterschied zu den mobilen Kontrollvorrichtungen 6, 6' ein Kommunikationsmodul für die Kommunikation über den festen Kommunikationskanal 9' umfasst. Die Kontrollvorrichtungen 6' und 6" sind jeweils mit zutrittskontrollierenden Mitteln, insbesondere mit automatischen Türen 51 verbunden. Obwohl dies nicht dargestellt ist, kann der Berechtigungsdatenspeicher eines Dienstleistungserbringers auch in der Berechtigungszentrale 1 lokalisiert sein. Dadurch verzögert sich jedoch die Kommunikation zwischen dem Berechtigungskontrollmodul der Kontrollvorrichtungen 6, 6', 6" und dem Berechtigungsdatenspeicher und bei Kommunikationsproblemen kann nicht auf den Berechtigungsdatenspeicher zugegriffen werden.

Das Berechtigungskontrollmodul 62 ist mit der Lesevorrichtung 61 verbunden und vorzugsweise als programmiertes Softwaremodul ausgeführt, das einen Prozessor der Kontrollvorrichtung 6 steuert. Das Berechtigungskontrollmodul 62 ist vorzugsweise direkt mit dem Berechtigungsdatenspeicher 63 verbunden. Falls der Berechtigungsdatenspeicher in der Berechtigungszentrale 1 lokalisiert ist, ist das Berechtigungskontrollmodul 62 über das Mobilfunknetz 4, respektive über den Kommunikationskanal 9' mit dem Berechtigungsdatenspeicher verbunden. Das Berechtigungskontrollmodul 62 überprüft die Übereinstimmung der Benutzerkennung, die durch die Lesevorrichtung 61 vom Benutzerkennungsträger 8 gelesen wurde, mit den Benutzerkennungen, die in den Berechtigungsbelegen enthalten sind, die im Berechtigungsspeicher 63 gespeichert sind. Die Überprüfung der Übereinstimmung erfolgt durch einen Vergleich der Benutzerkennungen, wobei kryptographische Mechanismen einbezogen werden können, welche die Detektion von gefälschten Benutzerkennungsträgem mit unrechtmässig kopierten Benutzerkennungen verhindern oder zumindest erschweren. Bei übereinstimmenden Benutzerkennungen zeigt das Berechtigungskontrollmodul 62 die im betreffenden Berechtigungsbeleg enthaltenen Berechtigungsdaten auf der Anzeige 65 an. Falls die Berechtigung des Benutzers zur Inanspruchnahme der betreffenden Dienstleistung ausreicht, kann der Kontrolleur, der die Kontrollvorrichtung 6 bedient, die Inanspruchnahme der Dienstleistung mittels der Bedienungselemente 66 quittieren, und die Berechtigung für die bezogene Dienstleistung wird durch das Berechtigungskontrollmodul 62 entwertet. In den fest installierten Kontrollvorrichtungen 6' und 6" entfällt sowohl die Anzeige als auch die Quittierung der Berechtigungsdaten und stattdessen schaltet das Berechtigungskontrollmodul bei vorhandener Berechtigung die zutrittskontrollierenden Mittel frei, so dass beispielsweise die automatische Türe 51 geöffnet wird.

Der Fachmann wird verstehen, dass programmierte Softwaremodule, die in der Beschreibung erwähnt werden, auch ganz oder teilweise hardwaremässig ausgeführt werden können.

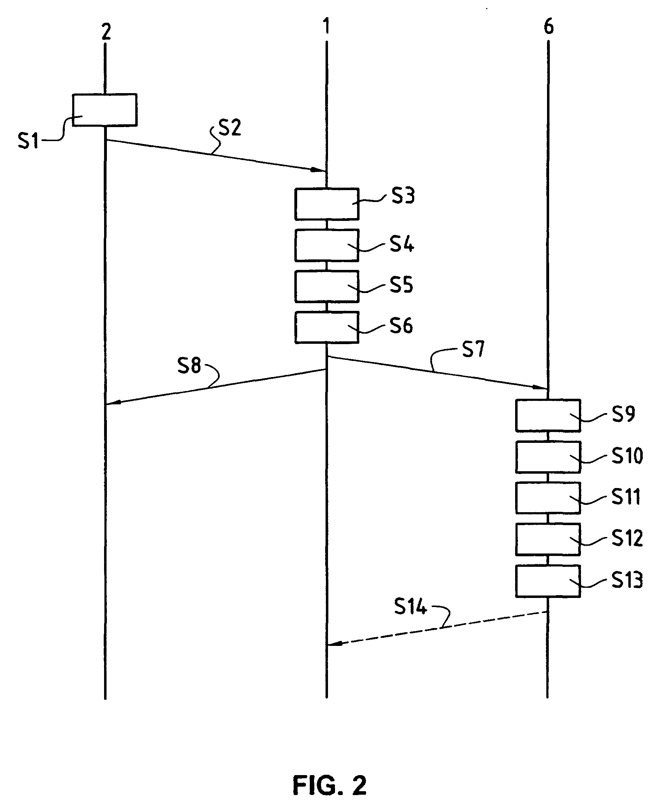

In den folgenden Abschnitten wird der Ablauf der Zuweisung und Kontrolle von Dienstleistungsberechtigungen mit Bezug auf die Figur 2 und am Anwendungsbeispiel von Berechtigungen für die Benutzung von öffentlichen Verkehrsmitteln, insbesondere für die Benutzung der Eisenbahn, beschrieben, wobei in diesem Beispiel ein Kontrolleur die tragbare mobile Vorrichtung 6 zur Kontrolle der Dienstleistungsberechtigungen von Benutzen (Fahrgästen) verwendet.

Im Schritt S1 gibt der Benutzer die Bestelldaten für eine gewünschte Eisenbahnfahrt in sein Kommunikationsendgerät 2 ein. Die Bestelldaten umfassen die Eisenbahnstrecke oder die Zugsnummer, die Eisenbahnklasse, das Reisedatum, optional die Reisezeit und die Anzahl Reisende.

Im Schritt S2 werden die im Schritt S1 eingegebenen Bestelldaten vom Kommunikationsendgerät 2 über das Kommunikationsnetz 3 an die Berechtigungszentrale 1 übermittelt.

Im Schritt S3 wird in der Berechtigungszentrale 1 automatisch die Endgerätkennung (Rufnummer) des Kommunikationsendgeräts 2 bestimmt, von welchem die Bestelldaten übermittelt wurden.

Im Schritt S4 wird in der Berechtigungszentrale 1 automatisch die Benutzerkennung bestimmt, die der Endgerätkennung zugeordnet ist, die im Schritt S3 bestimmt wurde.

Im Schritt S5 wird in der Berechtigungszentrale 1 basierend auf den empfangenen Bestelldaten ein Berechtigungsbeleg erzeugt, der die bestimmte Benutzerkennung umfasst, die im Schritt S4 bestimmt wurde. Neben der Benutzerkennung umfasst der Berechtigungsbeleg Berechtigungsdaten, die den empfangenen Bestelldaten entsprechen.

Im Schritt S6 wird in der Berechtigungszentrale 1 basierend auf den empfangenen Bestelldaten automatisch der Berechtigungsdatenspeicher 63 des zuständigen Dienstleistungserbringers bestimmt. Das heisst im vorliegenden Beispiel, dass auf Grund der angegebenen Eisenbahnstrecke oder Zugsnummer, der Eisenbahnklasse, des Reisedatums, und gegebenenfalls der Reisezeit der Berechtigungsdatenspeicher 63, respektive die Kontrollvorrichtung 6, bestimmt wird, die dem betreffenden Zug zugeordnet sind. Es können auch mehrere Berechtigungsdatenspeicher 63 oder Kontrollvorrichtungen 6 bestimmt werden.

Im Schritt S7 wird der im Schritt S5 erzeugte Berechtigungsbeleg über das Mobilfunknetz 4 zur Speicherung in den im Schritt S6 bestimmten Berechtigungsdatenspeicher 63 an die Kontrollvorrichtung 6 übermittelt.

Im Schritt S8 wird dem Benutzer durch die Berechtigungszentrale 1 eine Bestätigung über das Kommunikationsnetz 3 an sein Kommunikationsendgerät 2 übermittelt. In diesem Schritt können dem Benutzer auch die Kosten für den ausgestellten Berechtigungsbeleg und die damit verbundenen Dienstleistungen verrechnet werden.

Im Schritt S9 wird der empfangene Berechtigungsbeleg in der Kontrollvorrichtung 6 in den Berechtigungsdatenspeicher 63 gespeichert.

Im Schritt S10 wird durch die Lesevorrichtung 61 in der Kontrollvorrichtung 6 die Benutzerkennung vom Benutzerkennungsträger 8 des Benutzers gelesen.

Im Schritt S11 wird in der Kontrollvorrichtung 1 automatisch die Übereinstimmung der im Schritt S10 gelesenen Benutzerkennung mit den Benutzerkennungen überprüft, die in den im Berechtigungsdatenspeicher 63 gespeicherten Berechtigungsbelegen enthalten sind.

Im Schritt S12 werden bei einer im Schritt S11 gefundenen Übereinstimmung die Berechtigungsdaten des Berechtigungsbelegs mit der übereinstimmenden Benutzerkennung auf der Anzeige 65 der Kontrollvorrichtung 6 angezeigt. Falls im Schritt S11 keine Übereinstimmung gefunden wurde, wird diese Tatsache im Schritt S12 auf der Anzeige 65 angezeigt. Der Kontrolleur, der die Kontrollvorrichtung 6 bedient, überprüft, ob die angezeigten Berechtigungsdaten zur Inanspruchnahme der betreffenden Dienstleistung ausreicht, das heisst, ob der Benutzer für die Eisenbahnfahrt auf der betreffenden Eisenbahnstrecke in der betreffenden Eisenbahnklasse berechtigt ist.

Im Schritt S13 quittiert der Kontrolleur mittels der Bedienungselemente 66 der Kontrollvorrichtung 6 die im Schritt S12 angezeigten Informationen und der gegebenenfalls vorhandene Berechtigungsbeleg wird im Berechtigungsdatenspeicher 63 entwertet oder gelöscht.

Im Schritt S14 erfolgt optional eine Rückmeldung von der Kontrollvorrichtung 6 an die Berechtigungszentrale 1. Diese Rückmeldung kann in der Berechtigungszentrale 1 für statistische Zwecke verwendet werden. Die Rückmeldung kann in der Berechtigungszentrale 1 aber auch dazu verwendet werden, die Kostenverrechnung einzuleiten, falls die Kosten nur bei bezogener Leistung verrechnet werden sollen.

### Gewerbliche Anwendbarkeit

Die vorliegende Erfindung ermöglicht die Zuweisung und Kontrolle von Berechtigungen für Dienstleistungen, insbesondere für Dienstleistungen von öffentlichen Verkehrsmitteln wie Eisenbahnfahrten in der öffentlichen Eisenbahn.

## Patentansprüche

1. Ein System zum Zuweisen und Kontrollieren von Dienstleistungsberechtigungen, umfassend: Berechtigungsdatenspeicher (63) von mindestens einem Dienstleistungserbringer, eine computerisierte, mit einem Kommunikationsnetz (3) verbindbare Berechtigungszentrale (1) mit einem Kommunikationsmodul (11) zum Entgegennehmen von Bestelldaten, die von einem Benutzer mittels eines Kommunikationsendgeräts (2, 2', 2") über das Kommunikationsnetz (3) übermittelt werden, welche Berechtigungszentrale (1) ein Belegerzeugungsmodul (14) umfasst zum Erzeugen eines Berechtigungsbelegs basierend auf den empfangenen Bestelldaten, welcher Berechtigungsbeleg eine Benutzerkennung umfasst, welche Berechtigungszentrale (1) ein Berechtigungslademodul (15) umfasst zum Laden des erzeugten Berechtigungsbelegs über einen Kommunikationskanal (9) in einen der Berechtigungsdatenspeicher (63), Lesevorrichtungen (61) zum Lesen einer Benutzerkennung von einem Benutzerkennungsträger (8) eines Benutzers, und Berechtigungskontrollmodule (62) zum Überprüfen der Übereinstimmung der gelesenen Benutzerkennung mit den im Berechtigungsdatenspeicher (63) gespeicherten Benutzerkennungen, **dadurch gekennzeichnet,**
**dass** das System ein Endgerätbestimmungsmodul (12) umfasst zur automatischen Bestimmung einer Endgerätkennung, die dem Kommunikationsendgerät (2, 2', 2") zugeordnet ist, von dem die Bestelldaten übermittelt wurden,
**dass** die Berechtigungszentrale (1) ein Benutzerbestimmungsmodul (13) umfasst zur Bestimmung einer Benutzerkennung, die der bestimmten Endgerätkennung zugeordnet ist,
**dass** das Belegerzeugungsmodul (14) eingerichtet ist zum Einfügen der bestimmten Benutzerkennung in den Berechtigungsbeleg, welcher Berechtigungsdaten betreffend Dienstleistungsberechtigungen für ein öffentliches Verkehrsmittel umfasst,
**dass** das System eine Reisedatenbank (16) umfasst, in welcher die Berechtigungsdatenspeicher (63) zu Reisestrecken und spezifischen öffentlichen Verkehrsmitteln zugeordnet sind, und
**dass** das Berechtigungslademodul (15) so beschaffen ist, dass es den Berechtigungsbeleg in einen Berechtigungsdatenspeicher (63) lädt, der in der Reisedatenbank (16) durch Reisedaten für ein öffentliches Verkehrsmittel bestimmt ist, die in den empfangenen Bestelldaten eingefügt sind.

2. Das System gemäss Anspruch 1, **dadurch gekennzeichnet, dass** es mehrere mobile computerisierte Kontrollvorrichtungen (6) umfasst, dass die Kontrollvorrichtungen (6) jeweils einen der Berechtigungsdatenspeicher (63), eine der Lesevorrichtungen (61) und eines der Berechtigungskontrollmodule (62) umfassen, wobei das Berechtigungskontrollmodul (62) mit der Lesevorrichtung (61) und dem Berechtigungsdatenspeicher (63) verbunden ist, dass das Berechtigungslademodul (15) so beschaffen ist, dass es den Berechtigungsbeleg über ein Mobilfunknetz (4) in den Berechtigungsdatenspeicher (63) derjenigen Kontrollvorrichtung (6) lädt, die durch die empfangenen Bestelldaten bestimmt ist, dass die Kontrollvonichtungen (6) jeweils eine Anzeige (65) umfassen, und dass die Berechtigungskontrollmodule (62) jeweils eingerichtet sind, die Berechtigungsdaten des im verbundenen Berechtigungsdatenspeicher (63) gespeicherten Berechtigungsbelegs, dessen Benutzerkennung mit der gelesenen Benutzerkennung übereinstimmt, auf der Anzeige (65) anzuzeigen.

3. Das System gemäss einem der Ansprüche 1 oder 2, **dadurch gekennzeichnet, dass** das Endgerätbestimmungsmodul (12) so beschaffen ist, dass es automatisch die Rufnummer des Kommunikationsendgeräts (2, 2') als Endgerätkennung bestimmt, dass das Benutzerbestimmungsmodul (13) so beschaffen ist, dass es die Benutzerkennung aus einer Benutzerdatenbank (17) bestimmt, in welcher Endgerätkennungen und diesen Endgerätkennungen zugeordnete Benutzerkennungen gespeichert sind, dass der Benutzerkennungsträger (8) eine Chipkarte ist, und dass die Lesevorrichtung (61) eingerichtet ist, um die Benutzerkennung von der Chipkarte zu lesen.

4. Eine computerisierte Berechtigungszentrale (1 ), die mit einem Kommunikationsnetz (3) verbindbar ist, umfassend: ein Kommunikationsmodul (11) zum Entgegennehmen von Bestelldaten, die von einem Benutzer mittels eines Kommunikationsendgeräts (2, 2', 2") über das Kommunikationsnetz (3) übermittelt werden, ein Belegerzeugungsmodul (14) zum Erzeugen eines Berechtigungsbelegs basierend auf den empfangenen Bestelldaten, welcher Berechtigungsbeleg eine Benutzerkennung umfasst, und ein Berechtigungslademodul (15) zum Laden des erzeugten Berechtigungsbelegs über einen Kommunikationskanal (9) in einen Berechtigungsdatenspeicher (63) eines Dienstleistungserbringers, **dadurch gekennzeichnet,**
**dass** die Berechtigungszentrale (1) ein Endgerätbestimmungsmodul (12) umfasst zur automatischen Bestimmung einer Endgerätkennung, die dem Kommunikationsendgerät (2, 2', 2") zugeordnet ist, von dem die Bestelldaten übermittelt wurden,
**dass** die Berechtigungszentrale (1) ein Benutzerbestimmungsmodul (13) umfasst zur Bestimmung einer Benutzerkennung, die der bestimmten Endgerätkennung zugeordnet ist,
**dass** das Belegerzeugungsmodul (14) eingerichtet ist zum Einfügen der bestimmten Benutzertcennung in den Berechtigungsbeleg, welcher Berechtigungsdaten betreffend Dienstleistungsberechtigungen für ein öffentliches Verkehrsmittel umfasst,
**dass** die Berechtigungszentrale (1) eine Reisedatenbank (16) umfasst, in welcher Berechtigungsdatenspeicher (63) zu Reisestrecken und spezifischen öffentlichen Verkehrsmitteln zugeordnet sind, und
**dass** das Berechtigungslademodul (15) so beschaffen ist, dass es den Berechtigungsbeleg in einen Berechtigungsdatenspeicher (63) lädt, der in der Reisedatenbank (16) durch Reisedaten für ein öffentliches Verkehrsmittel bestimmt ist, die in den empfangenen Bestelldaten eingefügt sind.

5. Die Berechtigungszentrale (1) gemäss Anspruch 4, **dadurch gekennzeichnet, dass** das Berechtigungslademodul (15) so beschaffen ist, dass es den Berechtigungsbeleg über ein Mobilfunknetz (4) in einen Berechtigungsdatenspeicher (63) in einer mobilen, computerisierten Kontrollvorrichtung (6) lädt, die durch die empfangenen Bestelldaten bestimmt ist.

6. Die Berechtigungszentrale (1) gemäss einem der Ansprüche 4 oder 5, **dadurch gekennzeichnet, dass** das Endgerätbestimmungsmodul (12) so beschaffen ist, dass es automatisch die Rufnummer des Kommunikationsendgeräts (2, 2') als Endgerätkennung bestimmt, und dass das Benutzerbestimmungsmodul (13) so beschaffen ist, dass es die Benutzerkennung aus einer Benutzerdatenbank (17) bestimmt, in der Endgerätkennungen und diesen Endgerätkennungen zugeordnete Benutzerkennungen gespeichert sind.

7. Ein Verfahren zum Zuweisen und Kontrollieren von Dienstleistungsberechtigungen für öffentliche Verkehrsmittel, umfassend:
- Übermittlung von Bestelldaten von einem Benutzer mittels eines Kommunikationsendgeräts (2, 2', 2") über ein Kommunikationsnetz (3) an eine computerisierte Berechtigungszentrale (1), wobei im Kommunikationsendgerät (2, 2', 2") Reisedaten für ein öffentliches Verkehrsmittel in die Bestelldaten eingefügt werden,
- automatische Bestimmung einer Endgerätkennung, die dem Kommunikationsendgerät (2, 2', 2") zugeordnet ist, von dem die Bestelldaten übermittelt wurden,
- Bestimmung einer Benutzerkennung, die der bestimmten Endgerätkennung zugeordnet ist, durch die Berechtigungszentrale (1),
- Erzeugen eines Berechtigungsbelegs in der Berechtigungszentrale (1) basierend auf den empfangenen Bestelldaten, welcher Berechtigungsbeleg die bestimmte Benutzerkennung und Berechtigungsdaten betreffend Dienstleistungsberechtigungen für ein öffentliches Verkehrsmittel umfasst,
- Bestimmen eines Berechtigungsdatenspeichers (63) eines Dienstleistungserbringers durch die Berechtigungszentrale (1 ), wobei die Berechtigungszentrale (1) den Berechtigungsdatenspeicher (63) in einer Reisedatenbank (16), in welcher Berechtigungsdatenspeicher (63) zu Reisestrecken und spezifischen öffentlichen Verkehrsmitteln zugeordnet sind, basierend auf den in den empfangenen Bestelldaten eingefügten Reisedaten bestimmt,
- Laden des erzeugten Berechtigungsbelegs über einen Kommunikationskanal (9) in den bestimmten Berechtigungsdatenspeicher (63), und
- Kontrollieren der Dienstleistungsberechtigung des Benutzers durch
- Lesen einer Benutzerkennung von einem Benutzerkennungsträger (8) des Benutzers mittels einer Lesevorrichtung (61), und
- Überprüfen der Übereinstimmung der gelesenen Benutzerkennung mit den im Berechtigungsdatenspeicher (63) gespeicherten Benutzerkennungen durch ein Berechtigungskontrollmodul (62).

8. Das Verfahren gemäss Anspruch 7, **dadurch gekennzeichnet, dass** der Berechtigungsbeleg durch die Berechtigungszentrale (1) über ein Mobilfunknetz (4) in einen Berechtigungsdatenspeicher (63) in einer mobilen, computerisierten Kontrollvorrichtung (6) geladen wird, die durch die empfangenen Bestelldaten bestimmt ist, und dass die Berechtigungsdaten des in den Berechtigungsdatenspeicher (63) geladenen Berechtigungsbelegs, dessen Benutzerkennung mit der gelesenen Benutzerkennung übereinstimmt, auf einer Anzeige (65) der Kontrollvorrichtung (6) angezeigt werden.

9. Das Verfahren gemäss einem der Ansprüche 7 oder 8, **dadurch gekennzeichnet, dass** die Rufnummer des Kommunikationsendgeräts (2, 2') als Endgerätkennung verwendet wird, dass die Berechtigungszentrale (1) die Benutzerkennung aus einer Benutzerdatenbank (17) bestimmt, in der Endgerätkennungen und diesen Endgerätkennungen zugeordnete Benutzerkennungen gespeichert sind, dass Chipkarten als Benutzerkennungsträger (8) verwendet werden, und dass die Lesevorrichtung (61) die Benutzerkennung von einer Chipkarte liest.

10. Das Verfahren gemäss einem der Ansprüche 7 bis 9, **dadurch gekennzeichnet, dass** Dienstleistungsberechtigungen für Eisenbahnfahrten zugewiesen und kontrolliert werden.

## Claims

1. System for assignment and checking of service authorizations, comprising: authorization data memories (63) of at least one service provider, a computerized authorization control centre (1) which can be connected to a communications network (3) and has a communications module (11) for receiving order data which is transmitted from a user by means of a communication terminal (2, 2', 2'') via the communications network (3), which authorization control centre (1) includes a record production module (14) for production of an authorization record based on the received order data, which authorization record includes a user identifier, which authorization control centre (1) includes an authorization loading module (15) for loading the authorization record that has been produced via a communications channel (9) in one of the authorization data memories (63), reading apparatuses (61) for reading a user identifier from a user identifier medium (8) of a user, and authorization checking modules (62) for checking that the user identifier which has been read matches the user identifiers which are stored in the authorization data memory (63), **characterized**
**in that** the system includes a terminal determination module (12) for automatic determination of a terminal identifier, which is associated with the communications terminal (2, 2', 2''), from which the order data was transmitted,
**in that** the authorization control centre (1) includes a user determination module (13) for determination of a user identifier which is associated with the determined terminal identifier,
**in that** the record production module (14) is designed to insert the determined user identifier in the authorization record, which includes service authorizations, relating to authorization data, for a public transport facility,
**in that** the system includes a travel database (16) in which the authorization data memories (63) are associated with routes and specific public transport facilities, and
**in that** the authorization loading module (15) is designed such that it loads the authorization record in an authorization data memory (63) which is defined in the travel database (16) by travel data for a public transport facility, which travel data is inserted in the received order data.

2. System according to Claim 1, **characterized in that** the system includes a number of mobile computerized checking apparatuses (6), **in that** the checking apparatuses (6) each have one of the authorization data memories (63), one of the reading apparatuses (61) and one of the authorization checking modules (62), with the authorization checking module (62) being connected to the reading apparatus (61) and to the authorization data memory (63), **in that** the authorization loading module (15) is designed such that it loads the authorization record via a mobile radio network (4) in the authorization data memory (63) of that checking apparatus (6) which is defined by the received order data, **in that** the checking apparatuses (6) each have a display (65), and **in that** the authorization checking modules (62) are each designed to indicate on the display (65) the authorization data for the authorization record which is stored in the connected authorization data memory (63) and whose user identifier matches the user identifier which has been read.

3. System according to one of Claims 1 or 2, **characterized in that** the terminal determination module (12) is designed such that it automatically determines the call number of the communications terminal (2, 2') as a terminal identifier, **in that** the user determination module (13) is designed such that it determines the user identifier from a user database (17) in which terminal identifiers and user identifiers associated with these terminal identifiers are stored, **in that** the user identifier medium (8) is a chipcard, and **in that** the reading apparatus (61) is designed to read the user identifier from the chipcard.

4. Computerized authorization control centre (1) which can be connected to a communications network (3), comprising: a communications module (11) for receiving order data which is transmitted from a user by means of a communications terminal (2, 2', 2'') via the communications network (3), a record production module (14) for production of an authorization record based on the received order data, which authorization record includes a user identifier, and an authorization loading module (15) for loading the authorization record which has been produced via a communications channel (9) in an authorization data memory (63) of a service provider, **characterized**
**in that** the authorization control centre (1) includes a terminal determination module (12) for automatic determination of a terminal identifier which is associated with the communications terminal (2, 2', 2'') from which the order data was transmitted,
**in that** the authorization control centre (1) includes a user determination module (13) for determination of a user identifier which is associated with the determined terminal identifier,
**in that** the record production module (14) is designed for insertion of the determined user identifier in the authorization record, which includes service authorizations, relating to the authorization data, for a public transport facility,
**in that** the authorization control centre (1) includes a travel database (16) in which authorization data memories (63) are associated with routes and specific public transport facilities, and
**in that** the authorization loading module (15) is designed such that it loads the authorization record in an authorization data memory (63) which is determined in the travel database (16) by travel data for a public transport facility, which travel data is inserted in the received order data.

5. Authorization control centre (1) according to Claim 4, **characterized in that** the authorization loading module (15) is designed such that it loads the authorization record via a mobile radio network (4) in an authorization data memory (63) in a mobile, computerized checking apparatus (6) which is determined by the received order data.

6. Authorization control centre (1) according to one of Claims 4 or 5, **characterized in that** the terminal determination module (12) is designed such that it automatically determines the call number of the communications terminal (2, 2') as a terminal identifier, and **in that** the user determination module (13) is designed such that it determines the user identifier from a user database (17) in which terminal identifiers and user identifiers associated with these terminal identifiers are stored.

7. Method for assignment and checking of service authorizations for public transport facilities, comprising:
- transmission of order data from a user by means of a communications terminal (2, 2', 2'') via a communications network (3) to a computerized authorization control centre (1), with travel data for a public transport facility being inserted in the order data in the communications terminal (2, 2', 2''),
- automatic determination of a terminal identifier which is associated with the communications terminal (2, 2', 2'') from which the order data was transmitted,
- determination of a user identifier which is associated with the determined terminal identifier by the authorization control centre (1),
- production of an authorization record in the authorization control centre (1), based on the received order data, which authorization record comprises the determined user identifier and service authorizations relating to the authorization data for a public transport facility,
- determination of an authorization data memory (63) of a service provider by the authorization control centre (1), with the authorization control centre (1) determining the authorization data memory (63) in a travel database (16) in which authorization data memories (63) are associated with routes and specific public transport facilities, based on the travel data inserted in the received order data,
- loading of the authorization record that is produced via a communications channel (9) in the determined authorization data memory (63), and
- checking of the service authorization of the user by
- reading a user identifier from a user identifier medium (8) for the user by means of a reading apparatus (61), and
- checking that the user identifier which has been read matches the user identifiers stored in the authorization data memory (63), by means of an authorization checking module (62).

8. Method according to Claim 7, **characterized in that** the authorization record is loaded by the authorization control centre (1) via a mobile radio network (4) in an authorization data memory (63) in a mobile, computerized checking apparatus (6), which is determined by the received order data, and **in that** the authorization data of the authorization record which is loaded in the authorization data memory (63) and whose user identifier matches the user identifier which has been read is indicated on a display (65) on the checking apparatus (6).

9. Method according to one of Claims 7 or 8, **characterized in that** the call number of the communications terminal (2, 2') is used as a terminal identifier, **in that** the authorization control centre (1) determines the user identifier from a user database (17) in which terminal identifiers and user identifiers which are associated with these terminal identifiers are stored, **in that** chipcards are used as a user identifier medium (8), and **in that** the reading apparatus (61) reads the user identifier from a chipcard.

10. Method according to one of Claims 7 to 9, **characterized in that** service authorizations are assigned and checked for railway journeys.

## Revendications

1. Système pour affecter et contrôler des autorisations de prestation comprenant : une mémoire de données d'autorisation (63) d'au moins un prestataire de services, une centrale d'autorisation (1) informatisées pouvant être reliée avec un réseau de communication (3) et comprenant un module de communication (11) pour prendre en compte des données de commande qui sont transmises par un utilisateur au moyen d'un terminal de communication (2, 2', 2'') par le biais du réseau de communication (3), laquelle centrale d'autorisation (1) comprend un module générateur de record (14) pour générer un record d'autorisation en se basant sur les données de commande reçues, lequel record d'autorisation comprend un identifiant d'utilisateur, laquelle centrale d'autorisation (1) comprend un module de chargement d'autorisation (15) pour charger le record d'autorisation généré dans l'une des mémoires de données d'autorisation (63) par le biais d'un canal de communication (9), des dispositifs de lecture (61) pour lire un identifiant d'utilisateur d'un porteur d'identifiant d'utilisateur (8) d'un utilisateur, et des modules de contrôle d'utilisation (62) pour contrôler la concordance entre l'identifiant d'utilisateur lu et les identifiants d'utilisateur enregistrés dans la mémoire de données d'autorisation (63), **caractérisé en ce**
**que** le système comprend un module de détermination de terminal (12) pour déterminer automatiquement un identifiant de terminal qui est associé au terminal de communication (2, 2', 2'') depuis lequel ont été communiquées les données de commande,
**que** la centrale d'autorisation (1) comprend un module de détermination d'utilisateur (13) pour déterminer un identifiant d'utilisateur qui est associé à l'identifiant de terminal déterminé,
**que** le module de génération de record (14) est configuré pour insérer l'identifiant d'utilisateur déterminé dans le record d'autorisation, lequel comprend des données d'autorisation concernant des autorisations de prestation pour un moyen de transport public,
**que** le système comprend une base de données de voyage (16) dans laquelle les mémoires de données d'autorisation (63) sont associées à des trajets de voyage et à des moyens de transport publics spécifiques, et
**que** le module de chargement d'autorisation (15) est configuré de telle sorte qu'il charge le record d'autorisation dans une mémoire de données d'autorisation (63), laquelle est définie par des données de voyage dans la base de données de voyage (16) pour un moyen de transport public qui sont insérées dans les données de commande reçues.

2. Système selon la revendication 1, **caractérisé en ce qu'**il comprend plusieurs dispositifs de contrôle (6) informatisés mobiles, que les dispositifs de contrôle (6) comprennent à chaque fois l'une des mémoires de données d'autorisation (63), l'un des dispositifs de lecture (61) et l'un des modules de contrôle d'autorisation (62), le module de contrôle d'autorisation (62) étant relié au dispositif de lecture (61) et à la mémoire de données d'autorisation (63), que le module de chargement d'autorisation (15) est configuré de telle sorte qu'il charge le record d'autorisation par le biais d'un réseau de radiocommunication mobile (4) dans la mémoire de données d'autorisation (63) du dispositif de contrôle (6) correspondant, lequel est déterminé par les données de commande reçues, que les dispositifs de contrôle (6) comprennent à chaque fois un afficheur (65), et que les modules de contrôle d'autorisation (62) sont à chaque fois configurés pour afficher sur l'afficheur (65) les données d'autorisation du record d'autorisation qui est enregistré dans la mémoire de données d'autorisation (63) qui y est reliée et dont l'identifiant d'utilisateur coïncide avec l'identifiant d'utilisateur lu.

3. Système selon l'une des revendications 1 ou 2, **caractérisé en ce que** le module de détermination de terminal (12) est configuré de telle sorte qu'il détermine automatiquement le numéro d'appel du terminal de communication (2, 2') sous la forme d'un identifiant de terminal, que le module de détermination d'utilisateur (13) est configuré de telle sorte qu'il détermine l'identifiant d'utilisateur à partir d'une base de données d'utilisateur (17) dans laquelle sont enregistrés les identifiants de terminal et les identifiants d'utilisateur associés à ces identifiants de terminal, que le support d'identifiant d'utilisateur (8) est une carte à puce, et que le dispositif de lecture (61) est configuré de telle sorte à lire l'identifiant d'utilisateur sur la carte à puce.

4. Centrale d'autorisation (1) informatisée pouvant être reliée avec un réseau de communication (3) et comprenant un module de communication (11) pour prendre en compte des données de commande qui sont transmises par un utilisateur au moyen d'un terminal de communication (2, 2', 2'') par le biais du réseau de communication (3), un module générateur de record (14) pour générer un record d'autorisation en se basant sur les données de commande reçues, lequel record d'autorisation comprend un identifiant d'utilisateur, et un module de chargement d'autorisation (15) pour charger le record d'autorisation généré par le biais d'un canal de communication (9) dans l'une des mémoires de données d'autorisation (63) d'un prestataire de services, **caractérisée en ce**
**que** la centrale d'autorisation (1) comprend un module de détermination de terminal (12) pour déterminer automatiquement un identifiant de terminal qui est associé au terminal de communication (2, 2', 2'') depuis lequel ont été communiquées les données de commande,
**que** la centrale d'autorisation (1) comprend un module de détermination d'utilisateur (13) pour déterminer un identifiant d'utilisateur qui est associé à l'identifiant de terminal déterminé,
**que** le module de génération de record (14) est configuré pour insérer l'identifiant d'utilisateur déterminé dans le record d'autorisation, lequel comprend des données d'autorisation concernant des autorisations de prestation pour un moyen de transport public,
**que** la centrale d'autorisation (1) comprend une base de données de voyage (16) dans laquelle les mémoires de données d'autorisation (63) sont associées à des trajets de voyage et à des moyens de transport publics spécifiques, et
**que** le module de chargement d'autorisation (15) est configuré de telle sorte qu'il charge le record d'autorisation dans une mémoire de données d'autorisation (63), laquelle est définie par des données de voyage dans la base de données de voyage (16) pour un moyen de transport public qui sont insérées dans les données de commande reçues.

5. Centrale d'autorisation (1) selon la revendication 4, **caractérisée en ce que** le module de chargement d'autorisation (15) est configuré de telle sorte qu'il charge le record d'autorisation par le biais d'un réseau de radiocommunication mobile (4) dans une mémoire de données d'autorisation (63) dans un dispositif de contrôle (6) informatisé mobile, lequel est déterminé par les données de commande reçues.

6. Centrale d'autorisation (1) selon l'une des revendications 4 ou 5, **caractérisée en ce que** le module de détermination de terminal (12) est configuré de telle sorte qu'il détermine automatiquement le numéro d'appel du terminal de communication (2, 2') sous la forme d'un identifiant de terminal, et que le module de détermination d'utilisateur (13) est configuré de telle sorte qu'il détermine l'identifiant d'utilisateur à partir d'une base de données d'utilisateur (17) dans laquelle sont enregistrés les identifiants de terminal et les identifiants d'utilisateur associés à ces identifiants de terminal.

7. Procédé pour affecter et contrôler des autorisations de prestation pour des moyens de transport publics, comprenant :
- transmission des données de commande d'un utilisateur au moyen d'un terminal de communication (2, 2', 2") par le biais d'un réseau de communication (3) à une centrale d'autorisation informatisée (1), des données de voyage pour un moyen de transport public étant insérées dans les données de commande dans le terminal de communication (2, 2', 2''),
- détermination automatique d'un identifiant de terminal qui est associé au terminal de communication (2, 2', 2'') duquel ont été transmises les données de commande,
- détermination par la centrale d'autorisation (1) d'un identifiant d'utilisateur qui est associé à l'identifiant de terminal déterminé,
- génération d'un record d'autorisation dans la centrale d'autorisation (1) en se basant sur les données de commande reçues, lequel record d'autorisation comprend l'identifiant d'utilisateur déterminé et les données d'autorisation concernant les autorisations de prestation pour un moyen de transport public,
- détermination d'une mémoire de données d'autorisation (63) d'un prestataire de services par la centrale d'autorisation (1), la centrale d'autorisation (1) déterminant la mémoire de données d'autorisation (63) dans une base de données de voyage (16), dans laquelle les mémoires de données d'autorisation (63) sont associées à des trajets de voyage et des moyens de transport publics spécifiques, en se basant sur les données de voyage insérées dans les données de commande reçues,
- chargement du record d'autorisation généré par le biais d'un canal de communication (9) dans la mémoire de données d'autorisation déterminée (63), et
- controle de l'autorisation de prestation de l'utilisateur par
- lecture d'un identifiant d'utilisateur depuis un support d'identifiant d'utilisateur (8) de l'utilisateur au moyen d'un dispositif de lecture (61), et
- contrôle de la concordance de l'identifiant d'utilisateur lu avec les identifiants d'utilisateur enregistrés dans la mémoire de données d'autorisation (63) par un module de contrôle d'autorisation (62).

8. Procédé selon la revendication 7, **caractérisé en ce que** le record d'autorisation est chargé par la centrale d'autorisation (1) par le biais d'un réseau de radiocommunication mobile (4) dans une mémoire de données d'autorisation (63) dans un dispositif de contrôle (6) informatisé mobile qui est défini par les données de commande reçues, et que les données d'autorisation du record d'autorisation chargé dans la mémoire de données d'autorisation (63) et dont l'identifiant d'utilisateur coïncide avec l'identifiant d'utilisateur lu sont affichées sur un afficheur (65) du dispositif de contrôle (6).

9. Procédé selon l'une des revendications 7 ou 8, **caractérisé en ce que** le numéro d'appel du terminal de communication (2, 2') est utilisé comme identifiant de terminal, que la centrale d'autorisation (1) détermine l'identifiant d'utilisateur à partir d'une base de données d'utilisateur (17) dans laquelle sont enregistrés les identifiants de terminal et les identifiants d'utilisateur associés à ces identifiants de terminal, que des cartes à puce sont utilisées comme supports d'identifiant d'utilisateur (8) et que le dispositif de lecture (61) lit l'identifiant d'utilisateur depuis une carte à puce.

10. Procédé selon l'une des revendications 7 à 9, **caractérisé en ce que** les autorisations de prestation sont affectées et contrôlées pour des trajets en chemin de fer.
